# EUROPEAN PATENT APPLICATION

(11) **EP 2 924 627 A1**
(43) Date of publication of application: **30.09.2015**
(21) Application number: 14197063.2
(22) Date of filing: 09.12.2014
(51) Int. Cl.: G06Q 10/10

(54) **METHOD, DEVICE AND SYSTEM FOR EVENT REMINDING**

(30) Priority: 27.03.2014 CN 201410119630
(71) Applicant: Xiaomi Inc., Beijing 100085 (CN)
(72) Inventor: Qi, Dongjie, Haidian District (CN); Kangshang, Mingxue, Haidian District, (CN); Wang, Fang, Haidian District (CN)
(74) Representative: Hanna, Peter William Derek

(57) **Abstract**

The present disclosure discloses a method, device and system for event reminding. The method for event reminding includes: acquiring (201, S503, S608) a reminder event in an alarm channel, the alarm channel providing an event reminder service to at least two clients (130) at the same time; acquiring (202, S504, S609) a subscription list of the alarm channel, the subscription list including respective clients who subscribe to the alarm channel; and sending (203, S505, S610) the reminder event to each client in the subscription list, the reminder event indicating each client to issue an event reminder according to the reminder event. The effect provided is a more efficient alarm reminder system in which the user does not need to manually set the alarm and can receive alarm reminders timely, thus avoiding forgotten events and delays.

## Description

### TECHNICAL FIELD

The present disclosure relates to the technical field of Internet, and more particularly, to a method, device and system for event reminding.

### BACKGROUND

As users need to deal with more and more tasks every day, alarms with reminder functions have become increasingly important in users' devices.

In practical applications, a user can remind himself to timely deal with certain things by setting an alarm. For example, if the user shall have a meeting at three in the afternoon, he can set the alarm for 2:40 p.m. to remind himself to be at the meeting on time; and if the user needs to go to work normally, he can set a wake up alarm in the morning to remind himself to get up in time.

At least the following deficiencies are found in the related art.

When the user meets with special circumstances, for example, the company requires him to go to work an hour earlier than usual in the morning one day, a wake up alarm set by the user before will be no longer applicable. In this case, in order to go to work in time, the user needs to change his alarm setting, and if the user forgets to change it, the user will not receive a timely reminder alarm, with the result that the user would be delayed, or even forget to handle related matters.

### SUMMARY

In view of the above, the present invention provides a method, device and system for event reminding in accordance with the claims which follow.

In order to solve the problems in the related art that the user needs to set the alarm for an individual event when it happens, while if the user forgets to set the alarm he would miss the important event, and the event notification is issued too late for the user to set the event reminder in certain conditions, the present disclosure provides a method, device and system for event reminding. The technical solutions are as follows.

According to a first aspect of the embodiments of the present disclosure, there is provided a method for event reminding, including:
acquiring a reminder event in an alarm channel, the alarm channel providing an event reminder service to at least two clients at the same time;
acquiring a subscription list of the alarm channel, the subscription list including respective clients who subscribe to the alarm channel; and
sending the reminder event to each client in the subscription list, the reminder event indicating each client to issue an event reminder according to the reminder event.

Alternatively, the sending the reminder event to each client in the subscription list includes:
sending the reminder event including a reminder time and a reminder reason to each client.

Alternatively, the sending the reminder event including the reminder time and the reminder reason to each client includes:
detecting whether a condition of network via which communicating with the client is better than a pre-set condition; and
if the condition of network via which communicating with the client is better than the pre-set condition, sending the reminder event including the reminder time, the reminder reason and a reminder manner to the client, the reminder manner including at least one of a reminder number, a reminder ringtone and a reminder page.

Alternatively, the reminder ringtone includes a ringtone corresponding to the reminder event, and/or
the reminder page includes an operating entrance for guiding the client to respond to the reminder event.

Alternatively, an open request for opening the alarm channel sent from an authentication server is received;
whether the authentication server has an authority to open the alarm channel is detected; and
if the authentication server has the authority to open the alarm channel, the alarm channel is opened, and an open successful message is returned to the authentication server.

Alternatively, the method further includes:
receiving a subscription request for subscribing to the alarm channel sent from a first client;
detecting whether the first client has an authority to subscribe to the alarm channel; and
if the first client has the authority to subscribe to the alarm channel, adding the first client to the subscription list, and returning a subscription successful message to the first client.

Alternatively, the detecting whether the first client has the authority to subscribe to the alarm channel includes:
sending an identify of the first client to the authentication server to which the alarm channel corresponds; and
receiving an authentication passing message returned from the authentication server, the authentication passing message being a message returned after authenticating the first client according to the identify by the authentication server, and indicating that the first client has the subscription authority for subscribing to the alarm channel.

Alternatively, the method further includes:
receiving a cancellation request for unsubscribing to the alarm channel sent from a second client; and
deleting the second client from the subscription list, and returning a cancellation successful message to the second client.

According to a second aspect of the embodiments of the present disclosure, there is provided a method for event reminding, including:
creating a reminder event in an alarm channel, the alarm channel providing an event reminder service to at least two clients at the same time; and
sending the reminder event to an alarm server, the reminder event indicating the alarm server to forward the reminder event to each client in a subscription list of the alarm channel, the subscription list including respective clients who subscribe to the alarm channel, and the reminder event indicating each client to issue an event reminder according to the reminder event.

Alternatively, the creating the reminder event in the alarm channel includes:
creating the reminder event including a reminder time, a reminder reason and a reminder manner in the alarm channel, the reminder manner including at least one of a reminder number, a reminder ringtone and a reminder page.

Alternatively, the reminder ringtone includes a ringtone corresponding to the reminder event, and/or
the reminder page includes an operating entrance for guiding the client to respond to the reminder event.

Alternatively, the method further includes:
sending an open request for opening the alarm channel to the alarm server; and
receiving an open successful message returned from the alarm server, the open successful message being a message returned after the alarm server receiving the open request, detecting that the authentication server has the authority to open the alarm channel and then opening the alarm channel.

Alternatively, the method further includes:
receiving an identity of a first client sent from the alarm server, the first client being a client who requests to subscribe to the alarm channel;
authenticating the first client according to the identity; and
when the authentication to the first client is passed, returning an authentication passing message to the alarm server, the authentication passing message indicating the first client has the subscription authority for subscribing to the alarm channel.

According to a third aspect of the embodiments of the present disclosure, there is provided a method for event reminding, including:
receiving a reminder event sent from an alarm server, the reminder event being a reminder event in an alarm channel which is acquired by the alarm server and is an event sent to each client in a subscription list of the alarm channel after acquiring the subscription list, the alarm channel providing an event reminder service to at least two clients at the same time, and the subscription list including respective clients who subscribe to the alarm channel; and
issuing an event reminder according to the reminder event.

Alternatively, the method further includes:
sending a subscription request for subscribing to the alarm channel to the alarm server; and
receiving a subscription successful message returned from the alarm server.

Alternatively, the method further includes:
sending a cancellation request for unsubscribing to the alarm channel to the alarm server; and
receiving a cancellation successful message returned from the alarm server.

According to a fourth aspect of the embodiments of the present disclosure, there is provided a device for event reminding, characterized in that the device includes:
an event acquiring module configured to acquire a reminder event in an alarm channel, the alarm channel providing an event reminder service to at least two clients at the same time;
a list acquiring module configured to acquire a subscription list of the alarm channel, the subscription list including respective clients who subscribe to the alarm channel; and
an event sending module configured to send the reminder event acquired by the event acquiring module to each client in the subscription list, the reminder event indicating each client to issue an event reminder according to the reminder event.

Alternatively, the event sending module is configured to send the reminder event including a reminder time and a reminder reason to each client.

Alternatively, the event sending module includes:
a network condition detecting unit configured to detect whether a condition of network via which communicating with the client is better than a pre-set condition; and
an event sending unit configured to, if a detection result of the network condition detecting unit is that the condition of network via which communicating with the client is better than the pre-set condition, send the reminder event including the reminder time, the reminder reason and a reminder manner to the client, the reminder manner including at least one of a reminder number, a reminder ringtone and a reminder page.

Alternatively, the reminder ringtone includes a ringtone corresponding to the reminder event, and/or
the reminder page includes an operating entrance for guiding the client to respond to the reminder event.

Alternatively, the device further includes:
an open request receiving module configured to receive an open request for opening the alarm channel sent from an authentication server;
a first detecting module configured to detect whether the authentication server has an authority to open the alarm channel; and
a channel open module configured to, if the authentication server has the authority to open the alarm channel, open the alarm channel, and return an open successful message to the authentication server.

Alternatively, the device further includes:
a subscription request receiving module configured to receive a subscription request for subscribing to the alarm channel sent from a first client;
a second detecting module configured to detect whether the first client has an authority to subscribe to the alarm channel; and
a client adding module configured to, if the first client has the authority to subscribe to the alarm channel, add the first client to the subscription list, and return a subscription successful message to the first client.

Alternatively, the second detecting module includes:
an identify sending unit configured to send an identify of the first client to the authentication server to which the alarm channel corresponds; and
a message receiving unit configured to receive an authentication passing message returned from the authentication server, the authentication passing message being a message returned after authenticating the first client according to the identify by the authentication server, and indicating that the first client has the subscription authority for subscribing to the alarm channel.

Alternatively, the device further includes:
a cancellation request receiving module configured to receive a cancellation request for unsubscribing to the alarm channel sent from a second client; and
a client deleting module configured to delete the second client from the subscription list, and returning a cancellation successful message to the second client.

According to a fifth aspect of the embodiments of the present disclosure, there is provided a device for event reminding, including:
an event creating module configured to create a reminder event in an alarm channel, the alarm channel providing an event reminder service to at least two clients at the same time; and
an event sending module configured to send the reminder event created by the event creating module to an alarm server, the reminder event indicating the alarm server to forward the reminder event to each client in a subscription list of the alarm channel, the subscription list including respective clients who subscribe to the alarm channel, and the reminder event indicating each client to issue an event reminder according to the reminder event.

Alternatively, the event creating module is configured to create the reminder event including a reminder time, a reminder reason and a reminder manner in the alarm channel, the reminder manner including at least one of a reminder number, a reminder ringtone and a reminder page.

Alternatively, the reminder ringtone includes a ringtone corresponding to the reminder event, and/or
the reminder page includes an operating entrance for guiding the client to respond to the reminder event.

Alternatively, the device further includes:
an open request sending module configured to send an open request for opening the alarm channel to the alarm server; and
a message receiving module configured to receive an open successful message returned from the alarm server, the open successful message being a message returned after the alarm server receiving the open request, detecting that the authentication server has the authority to open the alarm channel and then opening the alarm channel.

Alternatively, the device further includes:
an identity receiving module configured to receive an identity of a first client sent from the alarm server, the first client being a client who requests to subscribe to the alarm channel;
a client authenticating module configured to authenticate the first client according to the identity received by the identity receiving module; and
a message returning module configured to, when the client authenticating module passing the authentication to the first client, returning an authentication passing message to the alarm server, the authentication passing message indicating the first client has the subscription authority for subscribing to the alarm channel.

According to a sixth aspect of the embodiments of the present disclosure, there is provided a device for event reminding, including:
an event receiving module configured to receive a reminder event sent from an alarm server, the reminder event being a reminder event in an alarm channel which is acquired by the alarm server and is an event sent to each client in a subscription list of the alarm channel after acquiring the subscription list, the alarm channel providing an event reminder service to at least two clients at the same time, and the subscription list including respective clients who subscribe to the alarm channel; and
a reminder issuing module configured to issue an event reminder according to the reminder event.

Alternatively, the device further includes:
a subscription request sending module configured to send a subscription request for subscribing to the alarm channel to the alarm server; and
a first receiving module configured to receive a subscription successful message returned from the alarm server.

Alternatively, the device further includes:
a cancellation request sending module configured to send a cancellation request for unsubscribing to the alarm channel to the alarm server; and
a second receiving module configured to receive a cancellation successful message returned from the alarm server.

According to a seventh aspect of the embodiments of the present disclosure, there is provided a system for event reminding including an alarm server, an authentication server and a client;
the alarm server is connected with the authentication server and the client via a wired or wireless network, the alarm server includes the device for event reminding of the fourth aspect and its various possible implementing manners;
the authentication server is connected with the alarm server wired or wirelessly, the authentication server includes the device for event reminding of the fifth aspect and its various possible implementing manners; and
the client is connected with the alarm server wired or wirelessly, the authentication server includes the device for event reminding of the sixth aspect and its various possible implementing manners.

According to an eighth aspect of the embodiments of the present disclosure, there is provided a computer program, which when executing on a processor of a system for event reminding, performs a method according to any one described as above.

The technical solutions provided by the embodiments of the present disclosure may include the following beneficial effects.

In the present disclosure, by acquiring a reminder event in an alarm channel, the alarm channel providing an event reminder service to at least two clients at the same time; acquiring a subscription list of the alarm channel, the subscription list including respective clients who subscribe to the alarm channel; and then sending the reminder event to each client in the subscription list, the reminder event indicating each client to issue an event reminder according to the reminder event without setting the alarm by the user in his terminal, the problems in the related art that the user needs to set the alarm for individual events, and if the user forgets to set the alarm he would miss the important events, and that the event notification may be issued too late for the user to set the event reminder, are solved. The result is that the user need not manually set the alarm and can receive the alarm reminder timely, thus avoiding forgotten events and delays.

### BRIEF DESCRIPTION OF THE DRAWINGS

The accompanying drawings, which are incorporated in and constitute a part of this specification, illustrate embodiments consistent with the disclosure and, together with the description, serve to explain the principles of the present disclosure.
Fig. 1 is a block diagram of an implementing environment involved by a method for event reminding illustrated according to parts of the exemplary embodiments;
Fig. 2 is a flow chart of a method for event reminding illustrated according to one exemplary embodiment;
Fig. 3 is a flow chart of a method for event reminding illustrated according to another exemplary embodiment;
Fig. 4 is a flow chart of a method for event reminding illustrated according to further another exemplary embodiment;
Fig. 5 is a flow chart of a method for event reminding illustrated according to still another exemplary embodiment;
Fig. 6A is a flow chart of a method for event reminding illustrated according to still further another exemplary embodiment;
Fig. 6B is a block diagram of a display when an authentication server requests to open an alarm channel illustrated according to still further another exemplary embodiment;
Fig. 6C is a block diagram of a display when the alarm in the client executes a reminder illustrated according to still further another exemplary embodiment;
Fig. 6D is a flow chart of a method for event reminding illustrated according to still further another exemplary embodiment;
Fig. 6E is a block diagram of a display when the client requests to subscribe to the alarm channel illustrated according to still further another exemplary embodiment;
Fig. 6F is a flow chart of a method for event reminding illustrated according to still further another exemplary embodiment;
Fig. 6G is a block diagram of a display when the client cancels the subscription to the alarm channel illustrated according to still further another exemplary embodiment;
Fig. 7 is a block diagram of a device for event reminding illustrated according to one exemplary embodiment;
Fig. 8 is a block diagram of a device for event reminding illustrated according to another exemplary embodiment;
Fig. 9 is a block diagram of a device for event reminding illustrated according to further another exemplary embodiment;
Fig. 10 is a block diagram of a device for event reminding illustrated according to still another exemplary embodiment;
Fig. 11 is a block diagram of a device for event reminding illustrated according to still further another exemplary embodiment;
Fig. 12 is a block diagram of a device for event reminding illustrated according to still further another exemplary embodiment;
Fig. 13 is a block diagram of a server illustrated according to one exemplary embodiment; and
Fig. 14 is a block diagram of an apparatus for event reminder illustrated according to one exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented.

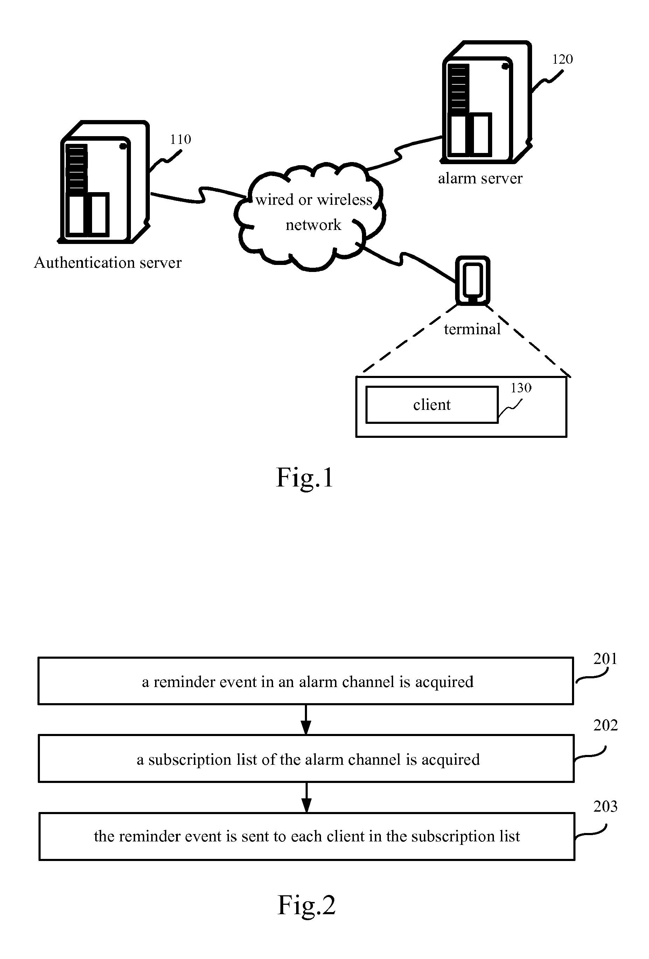

Fig. 1 is a block diagram of an implementing environment involved by a method for event reminding illustrated according to parts of the exemplary embodiments. As shown in Fig. 1, the implementing environment may include an authentication server 110, an alarm server 120 and a client 130.

The authentication server 110 may be connected to the alarm server 120 via a wired or wireless network, and then request to the alarm server 120 for creating an alarm channel, and send a reminder event in the alarm channel to the alarm server 120. In the actual implementation, the authentication server may also perform an authentication to each client who subscribes to the alarm channel.

The alarm server 120 is connected to the authentication server 110 and the client 130 respectively via a wired or wireless network. The alarm server 120 may create the alarm channel requested by the authentication server 110, and send the reminder event in the alarm channel to respective clients 130 who subscribe to the alarm channel 130.

The client 130 is such a client that is running in the terminal and is provided by a provider of the alarm service, and the client 130 may receive the reminder event in the subscribed alarm channel which is sent from the alarm server.

Fig. 2 is a flow chart of a method for event reminding illustrated according to one exemplary embodiment. As shown in Fig. 2, the method for event reminding is applied to the alarm server 120 in the implementing environment of Fig. 1, and the method for event reminding may include the following steps.

In step 201, a reminder event in an alarm channel is acquired.

The alarm channel provides an event reminder service to at least two clients at the same time.

In step 202, a subscription list of the alarm channel is acquired.

The subscription list includes respective clients who subscribe to the alarm channel.

In step 203, the reminder event is sent to each client in the subscription list.

The reminder event indicates each client to issue an event reminder according to the reminder event.

In summary, in the method for event reminding provided by the present embodiment, by acquiring a reminder event in an alarm channel, the alarm channel providing an event reminder service to at least two clients at the same time; acquiring a subscription list of the alarm channel, the subscription list including respective clients who subscribe to the alarm channel; and then sending the reminder event to each client in the subscription list, the reminder event indicating each client to issue an event reminder according to the reminder event without setting the alarm by the user in his terminal, the problems in the related art that the user needs to set the alarm for individual events, and if the user forgets to set the alarm he would miss the important events, and that the event notification may be issued too late for the user to set the event reminder are solved. The result is that the user need not manually set the alarm and can receive the alarm reminder timely, thus avoiding forgotten events and delays..

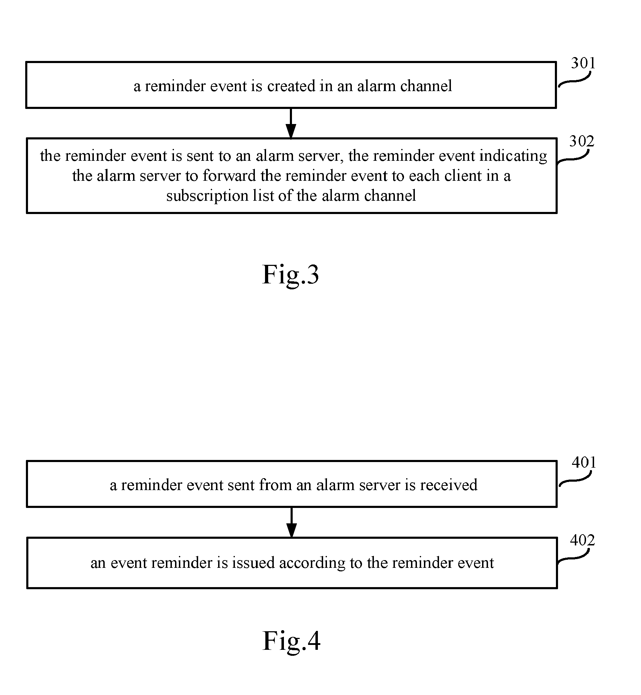

Fig. 3 is a flow chart of a method for event reminding illustrated according to one exemplary embodiment. As shown in Fig. 3, the method for event reminding is applied to the authentication server 110 in the implementing environment of Fig. 1, and the method for event reminding may include the following steps.

In step 301, a reminder event is created in an alarm channel.

The alarm channel provides an event reminder service to at least two clients at the same time.

In step 302, the reminder event is sent to an alarm server, the reminder event indicating the alarm server to forward the reminder event to each client in a subscription list of the alarm channel.

The subscription list includes respective clients who subscribe to the alarm channel, and the reminder event indicates each client to issue an event reminder according to the reminder event.

In summary, in the event reminder provided by the present embodiment, by creating a reminder event in an alarm channel, the alarm channel providing an event reminder service to at least two clients at the same time; and sending the reminder event to an alarm server, the reminder event indicating the alarm server to forward the reminder event to each client in the subscription list of the alarm channel, the subscription list including respective clients who subscribe to the alarm channel, and the reminder event indicating each client to issue an event reminder according to the reminder event, the problems in the related art that the user needs to set the alarm for individual events, the user forgets to set the alarm he would miss the important events, and the event notification is issued too late for the user to set the event reminder are solved. The result is that the user need not manually set the alarm and can receive the alarm reminder timely, thus avoiding forgotten events and delays.

Fig. 4 is a flow chart of a method for event reminding illustrated according to one exemplary embodiment. As shown in Fig. 4, the method for event reminding is applied to the client 130 in the implementing environment of Fig. 1, and the method for event reminding may include the following steps.

In step 401, a reminder event sent from an alarm server is received.

The reminder event is a reminder event in an alarm channel which is acquired by the alarm server and is an event sent to each client in a subscription list of the alarm channel after acquiring the subscription list, the alarm channel provides an event reminder service to at least two clients at the same time, and the subscription list includes respective clients who subscribe to the alarm channel.

In step 402, an event reminder is issued according to the reminder event.

In summary, in the method for event reminding provided by the present embodiment, by receiving a reminder event sent from an alarm server, the reminder event being a reminder event in an alarm channel which is acquired by the alarm server and being an event sent to each client in a subscription list of the alarm channel after acquiring the subscription list, the alarm channel providing an event reminder service to at least two clients at the same time, and the subscription list including respective clients who subscribe to the alarm channel; and then issuing an event reminder according to the reminder event, the problems in the related art that the user needs to set the alarm for individual events, and if the user forgets to set the alarm he would miss the important events, and that the event notification may be issued too late for the user to set the event reminder are solved. The result is that the user need not manually set the alarm and can receive the alarm reminder timely, thus avoiding forgotten events and delays.

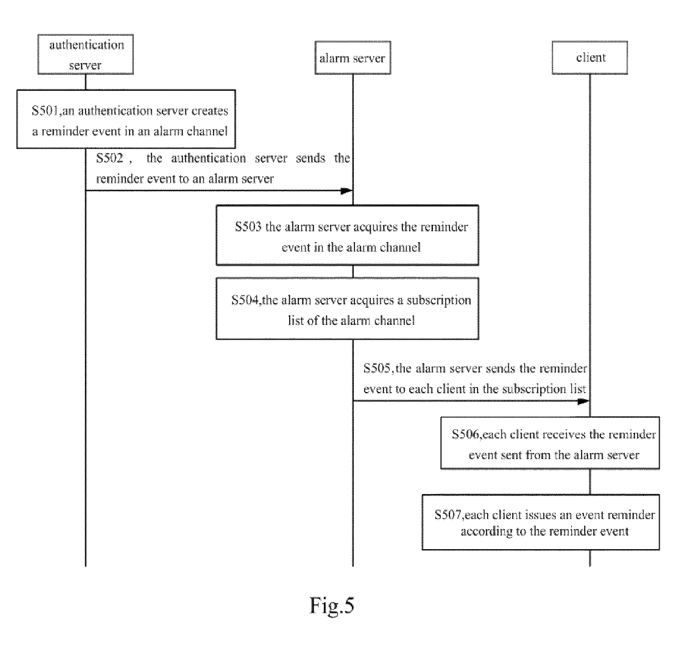

Fig. 5 is a flow chart of a method for event reminding illustrated according to one exemplary embodiment. As shown in Fig. 5, the method for event reminding is applied to the implementing environment of Fig. 1, and the method for event reminding may include the following steps.

In step 501, an authentication server creates a reminder event in an alarm channel.

The authentication server may create a reminder event in an alarm channel of itself. The reminder event includes a reminder time and a reminder reason, and the alarm channel provides an event reminder service to at least two clients at the same time.

For example, a company's normal work hour is 10:00 a.m., and there is a special circumstance requiring employees to start work at 8:30 in the morning on March 18^{th}, then in order to remind the employees to work on time, the company administrator may create a reminder event of going to work at 8:30 in the morning on March 18^{th} in the alarm channel of the company.

In step 502, the authentication server sends the reminder event to an alarm server.

The reminder event indicates the alarm server to forward the reminder event to each client in a subscription list of the alarm channel, and the subscription list includes respective clients who subscribe to the alarm channel.

In step 503, the alarm server acquires the reminder event in the alarm channel.

In step 504, the alarm server acquires a subscription list of the alarm channel.

After the alarm server acquires the reminder event in the alarm channel, the alarm server may acquire the subscription list of the alarm channel. In the actual implementation, the alarm server may acquire the subscription list that subscribing to the alarm channel according to a channel ID of the alarm channel in the reminder event.

For example, the alarm channel is a certain company's alarm channel, and then the alarm server may acquire a member list including all members in the company who subscribe to the alarm channel according to the channel ID of the alarm channel.

In step 505, the alarm server sends the reminder event to each client in the subscription list.

After the alarm server acquires the subscription list, in order to inform each client in the subscription list that there is a new reminder event so as to remind each client, the alarm server may send the reminder event to each client in the subscription list. The reminder event indicates each client to issue an event reminder according to the reminder event.

In step 506, each client receives the reminder event sent from the alarm server.

Accordingly, each client who subscribes to the alarm channel may receive the reminder event sent from the alarm server.

In step 507, each client issues an event reminder according to the reminder event.

After receiving the reminder event, the client may issue the event reminder according to the reminder event. For example, when the reminder time in the reminder event is arrived, the client issues a reminder by an alarm or a vibration.

Anyway, in the actual implementation, the client may select and change the reminder time in the reminder event according to requirements for usage. For example, if the client used by employees in the company receives the reminder event of going to work at 8:30 a.m. on March 18^{th}, in order to arrive the company at 8:30 a.m., the user may change the reminder time in the reminder event to 7:30 a.m., such that the alarm in the client will remind the user to get up early to go to work on time at 7:30 a.m. on March 18^{th}.

Anyway, in the actual implementation, the client may not change the reminder time in the reminder event. For example, if a certain producer wants to improve an audience rating of a new drama 'X husband' in a video website, the producer may send a reminder event to the users via an alarm channel in the video website to remind the users to watch the drama, then respective clients who subscribe to the alarm channel of the video website may receive the reminder event that "X husband" will be updated at 8:00 p.m. In this case, every time of 8:00 p.m., the reminder event that "X husband" will be updated will be given to the client, which avoids the problem of being unable to watch the latest episode at the first time.

In a first possible application scenario of this embodiment, a company administrator may create a reminder event in the company's alarm channel, and the alarm server sends the reminder event to the employees of the company to remind the employees to deal with certain events on time. For example, if the company administrator creates a reminder event of gathering at gate of the company at 9:00 a.m. on March 22^{nd} for spring outing, the employees of the company may accordingly receive the reminder event sent from the alarm server, and then arrive at the gathering location on time.

In a second possible application scenario of the present embodiment, in order to improve the audience rating of the drama, the producer of a drama pushes an updating reminder of the episode to respective clients via the alarm channel of the video website for reminding the users to watch the drama. For example, a reminder event that the 'X husband' will be updated with two episodes at 8:00 p.m. daily is created, the alarm server sends the reminder event to each client, and then each client may watch the latest episode on time with the reminder of the reminder event, which avoids the problem that the audience rating is influenced by missing watching the drama since the users do not know the update, and sending the reminder event to each client also avoids the problem that the users may not watch the latest episodes at the first time, and improves the user experience.

In a third possible application scenario in this embodiment, in order to help tourists to conveniently buy tickets during the holidays, a railway department may create a reminder event of releasing tickets. For example, the railway department creates a reminder event of 'releasing tickets at 3:00 p.m. daily', thus the client may accordingly receive the reminder event sent from the alarm server, and access the official website to grab the tickets on time with the reminder of the reminder event. In the actual implementation, in order to prevent the condition of the official website jamming due to that a large number of users simultaneously access the website when the tickets are released via the website, after receiving the reminder event, the client may move up the reminder time in the reminder event, and then access the official website in advance with the reminder of the changed reminder event.

In a fourth possible application scenario in the present embodiment, a shopping website may create an alarm event in the alarm channel and send the reminder event to each client via the alarm server. For example, if the shopping website launches an activity of home appliance selloff at 12:00 at noon on March 20^{th}, the administrator of the shopping website may create a reminder event of "home appliance selloff at 12:00 at noon on March 20^{th}", and send the reminder event to each client by the alarm server, after receiving the reminder event and arriving the reminder time, there will be an alarm reminder in the client, which avoids the problem that the user misses the selloff opportunity.

It should be noted that the above application scenarios are only examples of the present embodiment, in the actual implementation, according to different requirements for usage, the above methods of sending reminder event may also be applied in other application scenarios, the present embodiment does not enumerate the examples.

In summary, in the method for event reminding provided by the present embodiment, by acquiring a reminder event in an alarm channel, the alarm channel providing an event reminder service to at least two clients at the same time; acquiring a subscription list of the alarm channel, the subscription list including respective clients who subscribe to the alarm channel; and then sending the reminder event to each client in the subscription list, the reminder event indicating each client to issue an event reminder according to the reminder event without setting the alarm by the user in his terminal, the problems in the related art that the user needs to set the alarm for individual events, and if the user forgets to set the alarm he would miss the important events, and that the event notification may be issued too late for the user to set the event reminder are solved. The effects that the user need not to manually set the alarm and may receive the alarm reminder timely, thus avoiding event delay or forgotten is thereby achieved.

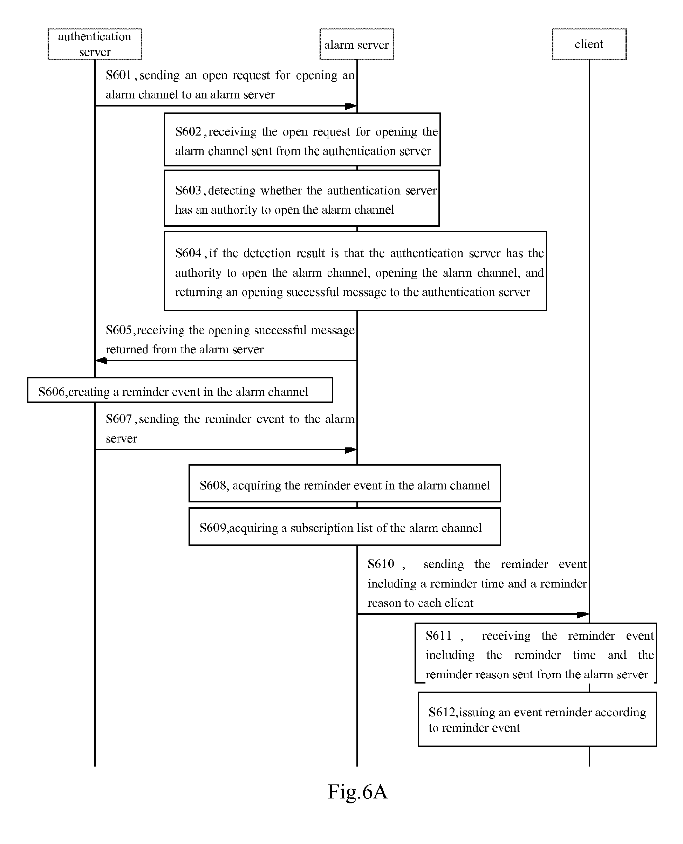

Fig. 6A is a flow chart of a method for event reminding illustrated according to one exemplary embodiment. As shown in Fig. 6A, the method for event reminding is applied to the implementing environment of Fig. 1, and the method for event reminding may include the following steps.

In step 601, an authentication server sends an open request for opening an alarm channel to an alarm server.

When the authentication server needs to use the alarm service provided by the alarm server, the authentication server may send an open request for opening the alarm channel to the alarm server. The alarm channel provides an event reminder service to at least two clients at the same time.

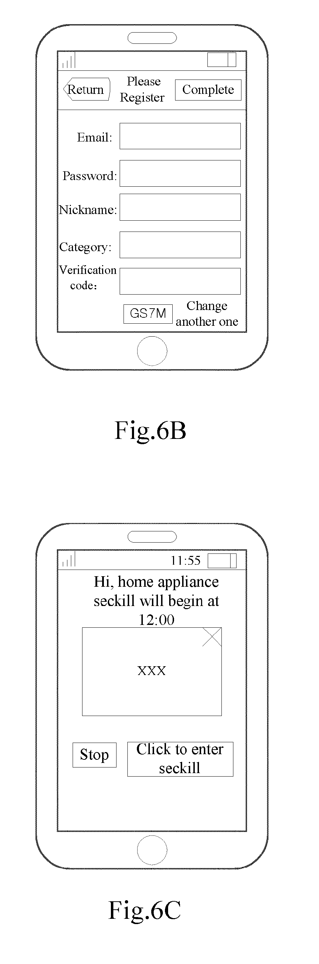

In the actual implementation, the authentication server may access a request interface for opening the alarm channel provided by the alarm server, fill in the relevant information in the request interface and click "submission", thereby the authentication server sends the open request to the alarm server. For example, the authentication server accesses a request interface shown in Fig. 6B, then after inputting the relevant information in the request interface, the authentication server sends the open request for opening the alarm channel to the alarm server.

In step 602, the alarm server receives the open request for opening the alarm channel sent from the authentication server.

In step 603, the alarm server detects whether the authentication server has an authority to open the alarm channel.

For example, the alarm server may verify the received relevant information in the request interface submitted by the authentication server, if approved, determine that the authentication server has the authority to open the alarm channel; and if not approved, determine that the authentication server has no authority to open the alarm channel.

The step of verifying data by the alarm server may include: detecting whether the email address and password entered in the request interface are matched, if yes, determining that the authentication server has the opening authority, and if no, determining that the authentication server has not the opening authority. Anyway, in the actual implementation, the alarm server may also detect whether the classification of the alarm channel requested to be opened is legal.

It should be noted that the present embodiment only takes the above methods for requesting the opening of the alarm channel as an example, in the actual implementation, other opening methods may be used. The present embodiment does not limit the data contents required for requesting the opening of the alarm channel, and with respect to different data contents, the methods for the alarm server to detect whether the authentication server has the authority to open the alarm channel are different.

In step 604, if the detection result of the alarm server is that the authentication server has the authority to open the alarm channel, the alarm channel is opened, and an opening successful message is returned to the authentication server.

If the detection result of the alarm server is that the authentication server has the authority to open the alarm channel, the alarm server will open the alarm and return the opening successful message to the authentication server. In the actual implementation, the alarm server may assign a channel ID to the alarm channel for identifying the alarm channel.

If the detection result of the alarm server is that the authentication server has no authority to open the alarm channel, the process ends.

In step 605, the authentication server receives the opening successful message returned from the alarm server.

The opening successful message is message returned after the alarm server receiving the open request, detecting that the authentication server had the authority to open the alarm channel and then opening the alarm channel.

In step 606, the authentication server creates a reminder event in the alarm channel.

When the authentication server receives the opening successful message, which indicates that the alarm channel has been opened successfully, then the authentication server may create a reminder event in the alarm channel. The reminder event includes a reminder time and a reminder reason.

In the actual implementation, the method of creating a reminder event by the authentication server may include: creating a reminder event including a reminder time, a reminder reason and a reminder manner in the alarm channel. The reminder manner includes at least one of a reminder number, a reminder ringtone and a reminder page. Also, the reminder ringtone may be a default ringtone set in the alarm server, or may be a personalized ringtone corresponding to the reminder event. For example, when the shopping website creates a reminder event, the reminder ringtone in the created reminder event may be an advertising video of the website. The reminder page may be an operating entrance for guiding respective clients to respond to the reminder event. For example, when the shopping website creates a reminder event, the created reminder page may include a buying entrance or a selloff entrance; and when the video website creates a reminder event, the created reminder page may be an entrance for viewing.

For instance, taking the reminder manner including the reminder number, the remind ringtone and the reminder page as an example, when the administrator of the shopping website creates a reminder event for reminding a selloff activity by using the authentication server, the authentication server may generate a reminder event including the reminder time of 12:00 at noon on March, 20^{th}, the reminder reason of home appliance selloff, and the reminder manner in which the reminder number is 3, the reminder ringtone is the advertising video of the website, and the reminder page is the selloff entrance.

In step 607, the authentication server sends the reminder event to the alarm server.

After creating the reminder event, the authentication server may send the reminder event to the alarm server. The reminder event indicates the alarm server to forward the reminder event to each client in the subscription list of the alarm channel.

In step 608, the alarm server acquires the reminder event in the alarm channel.

In step 609, the alarm server acquires a subscription list of the alarm channel.

After acquiring the reminder event in the alarm channel, the alarm server may acquire the subscription list of the alarm channel, the subscription list including respective clients who subscribe to the alarm channel. In the actual implementation, the alarm server may acquire the subscription list of the alarm channel according to the channel ID of the alarm channel.

In step 610, the alarm server sends the reminder event including a reminder time and a reminder reason to each client.

After acquiring the subscription list for subscribing to the alarm channel, the alarm server may send the reminder event including a reminder time and a reminder reason to each client. The reminder event indicates each client to issue the event reminder according to the reminder event.

Moreover, in the actual implementation, the method of sending the reminder event including a reminder time and a reminder reason to each client by the alarm server may include the steps as following.

First, for each client in the respective clients, the alarm server detects whether the condition of network via which communicating with the client is better than a pre-set condition.

For each client in the respective clients, the alarm server may detect whether the condition of network via which communicating with the client is better than the pre-set condition. For example, taking the pre-set condition that a communication is performed using a 2G (2nd-Generation wireless telephone technology) network as an example, the alarm server will detect whether the condition of network via which communicating with the client is better than the 2G network.

Second, if the condition of network via which communicating with the client is better than the pre-set condition, the reminder event including the reminder time, the reminder reason and the reminder manner is sent to the client, the reminder manner including at least one of a reminder number, a reminder ringtone and a reminder page.

If the detection result of the alarm server is that the condition of network via which communicating with the client is better than the pre-set condition, which indicating that the condition of the current network is good, then the alarm server may send the reminder event including the reminder time, the reminder reason and the reminder manner to the client.

For example, if the alarm server detects that the alarm server is communicated with the client via 3G network, due to a high Internet speed of 3G network, the server may send the reminder event including the reminder time, the reminder reason and the reminder manner to the client.

Meanwhile, if the detection result of the alarm server is that the condition of network via which communicating with the client is inferior than the pre-set condition, then the alarm server may send the reminder event only including the reminder time and the reminder reason to the client, which is not described repeatedly herein.

In step 611, each client receives the reminder event including the reminder time and the reminder reason sent from the alarm server.

Accordingly, each client who subscribes to the alarm channel may receive the reminder event send by the alarm server.

In step 612, each client issues an event reminder according to the reminder event.

The client may issue the event reminder according to the reminder event. For example, when the reminder time in the reminder event arrives, the client issues a reminder by an alarm or a vibration.

Anyway, in the actual implementation, after receiving the reminder event, the client may select to change the reminder time in the reminder event according to requirements for usage. For example, when the client receives a reminder event of home appliance selloff at 12:00 at noon, in order to improve the success rate of selloff, the user wants to enter the selloffpage in advance, in this case the user may change the reminder time in the reminder event to move up five minutes, that is, the client will issue this reminder at 11:55 a.m., for details please refer to Fig. 6C. When the reminder number is multiple, the client will issue the reminder in every predetermined time.

In summary, in the method for event reminding provided by the present embodiment, by acquiring a reminder event in an alarm channel, the alarm channel providing an event reminder service to at least two clients at the same time; acquiring a subscription list of the alarm channel, the subscription list including respective clients who subscribe to the alarm channel; and then sending the reminder event to each client in the subscription list, the reminder event indicating each client to issue an event reminder according to the reminder event without setting the alarm by the user in his terminal, the problems in the related art that the user needs to set the alarm for individual events, and if the user forgets to set the alarm he would miss the important events, and that the event notification may be issued too late for the user to set the event reminder are solved. The result is that the user need not manually set the alarm and may receive the alarm reminder timely, thus avoiding forgotten events or delay.

The reminder event in the present embodiment may also include at least one of a reminder number, a reminder ringtone and a reminder page, such that the authentication server may publicize itself by the reminder ringtone while sending the reminder to the client, and may also set an operation entrance for guiding the user's response in the reminder page to improve user experience.

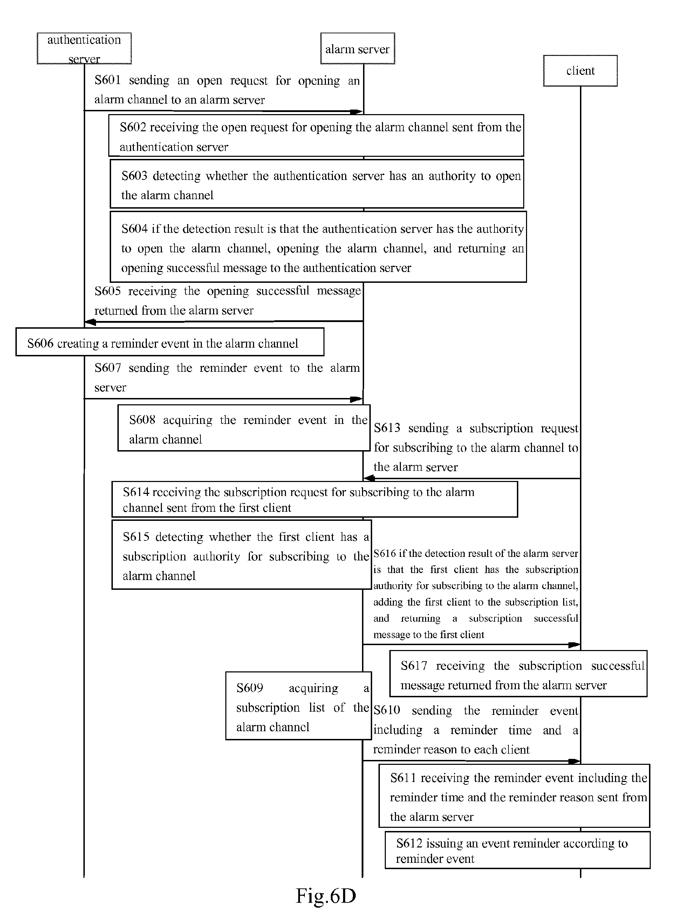

It should be noted that, after the successful creation of the alarm channel by the authentication server, the client may request to subscribe to the alarm channel. Referring to Fig. 6D, the method for event reminding may further include the following steps.

In step 613, a first client sends a subscription request for subscribing to the alarm channel to the alarm server.

After the alarm server creates the alarm channel, the user may request to subscribe to the alarm channel, i.e., the user will use his first client to send the subscription request for subscribing to the alarm channel.

In step 614, the alarm server receives the subscription request for subscribing to the alarm channel sent from the first client.

Accordingly, the alarm server may receive the subscription request for subscribing to the alarm channel sent from the first client.

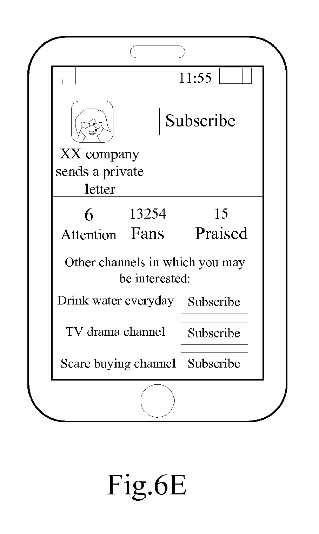

For example, with reference to Fig. 6E, in an interface of the alarm channel displayed by the first client, the user may click on a subscribe button, and the first client sends the subscription request for subscribing to the alarm channel after receiving the click signal.

In step 615, the alarm server detects whether the first client has a subscription authority for subscribing to the alarm channel.

After receiving the subscription request of the first client, the alarm server may detect whether the first client has the subscription authority for subscribing to the alarm channel.

The step of detecting whether the first client has the subscription authority for subscribing to the alarm channel by the alarm server may include the following steps.

First, an identity of the first client is sent to the authentication server to which the alarm channel corresponds.

The alarm server may send the identity of the first client in the subscription request to the authentication server to which the alarm channel corresponds.

For example, when the first client requests to subscribe to the alarm channel of Company A, the alarm server sends a job number of the first client in the subscription request to the authentication server to which the company A corresponds.

Second, the authentication server receives the identity of the first client sent from the alarm server.

Third, the authentication server authenticates the first client according to the identity.

For example, after receiving the job number of the first client, the authentication server detects whether there is the same job number in the information database of the company, if the detection result is that there is the same job number, the first client is authenticated by the authentication server; and if the detection result is that there is no the same job number, the first client is not authenticated by the authentication server. Anyway, in the actual implementation, when the authentication server creates two or more alarm channels at the same time, and each alarm channel corresponds to different suitable crowd, after receiving the job number, the authentication server also detects whether the job number meets the predetermined condition, such as whether the job number is the job number of the manager-level staff..

Fourth, when the first client is authenticated by the authentication server, an authentication passing message is returned to the alarm server.

When the first client is authenticated by the authentication server, which indicates that the first client has the subscription authority for subscribing to the alarm channel, the authentication server may return the authentication passing message to the alarm server. The authentication passing message indicates that the first client has the subscription authority for subscribing to the alarm channel.

When the first client is not successfully authenticated by the authentication server, which indicates that the first client has no subscription authority for subscribing to the alarm channel, the authentication server may return an authentication failure message to the alarm server.

Fifth, the alarm server receives the authentication passing message returned from the authentication server.

Accordingly, the alarm server may receive the authentication passing message returned from the authentication server.

When the alarm server receives the authentication failure message returned from the authentication server, the process ends.

In step 616, if the detection result of the alarm server is that the first client has the subscription authority for subscribing to the alarm channel, the first client will be added to the subscription list, and a subscription successful message is returned to the first client.

If the detection result of the alarm server is that the first client has the subscription authority for subscribing to the alarm channel, the alarm server may add the first client to the subscription list. Also, in the actual implementation, in order to inform the first client that the alarm channel has been successfully subscribed to, the alarm server may also send the subscription successful message to the first client, which is not described repeatedly herein.

In step 617, the first client receives the subscription successful message returned from the alarm server.

Accordingly, the first client may receive the subscription successful message returned from the alarm server, and after receiving the subscription successful message, the first client may find out that the alarm channel is successfully subscribed to by itself, then the client may enjoy the event reminder service provided by the alarm channel.

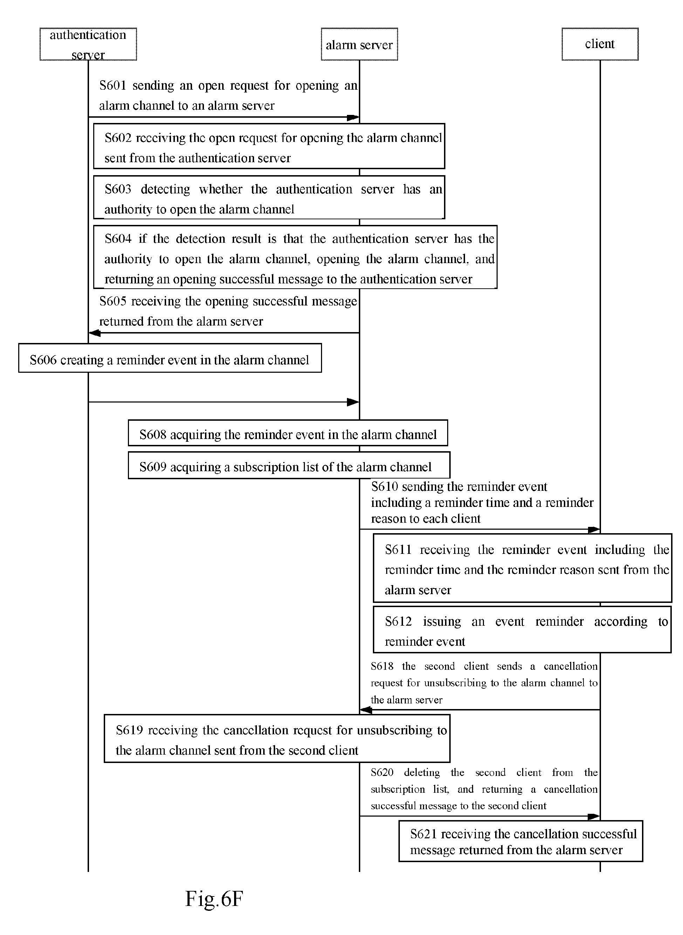

It should also be noted that, after subscribing to the alarm channel, the client may also request to unsubscribe to the alarm channel. With reference to Fig. 6F, the method for event reminding further includes the following steps.

In step 618, a second client sends a cancellation request for unsubscribing to the alarm channel to the alarm server.

When the user who has subscribed to the alarm channel no longer needs the alarm service, the user may send the cancellation request for unsubscribing to the alarm channel via his second client.

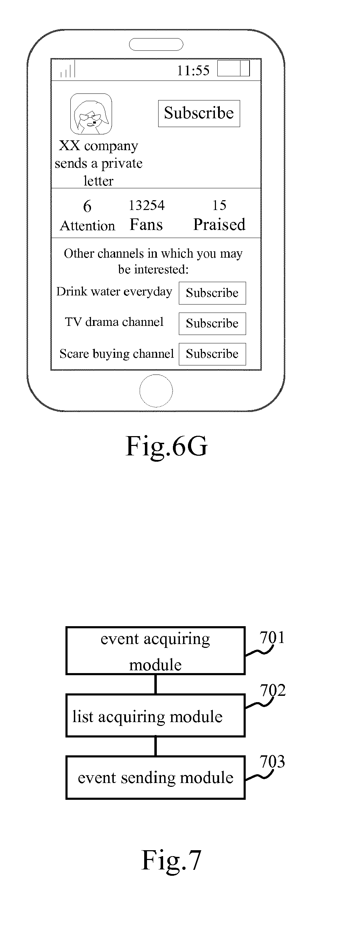

For example, with reference to Fig. 6G, in the display interface including the alarm channel displayed by the second client, the user may click on the unsubscribe button, and the second client sends the cancellation request for unsubscribing to the alarm channel after receiving the click signal.

In step 619, the alarm server receives the cancellation request for unsubscribing to the alarm channel sent from the second client.

The alarm server may correspondingly receive the cancellation request for unsubscribing to the alarm channel sent from the second client.

In step 620, the alarm server deletes the second client from the subscription list, and a cancellation successful message is returned to the second client.

After the alarm channel receives the cancellation request, the alarm server may delete the second client from the subscription list, and in order to inform the second client that the alarm channel has been successfully unsubscribed, the alarm server may also send the cancellation successful message to the second client.

In step 621, the second client receives the cancellation successful message returned from the alarm server.

The followings are the device embodiments of the present disclosure, which may be used to perform the method embodiments of the present disclosure. For the details not disclosed in the device embodiments of the present disclosure, the method embodiments of the present disclosure may be referred to.

Fig. 7 is a block diagram of a device for event reminding illustrated according to one exemplary embodiment. As shown in Fig. 7, the device for event reminding is applied to the alarm server 120 in the implementing environment of Fig. 1, and the device for event reminding may include, an event acquiring module 701, a list acquiring module 702 and an event sending module 703.

The event acquiring module 701 is configured to acquire a reminder event in an alarm channel, the alarm channel providing an event reminder service to at least two clients at the same time.

The list acquiring module 702 is configured to acquire a subscription list of the alarm channel, the subscription list including respective clients who subscribe to the alarm channel.

The event sending module 703 is configured to send the reminder event acquired by the event acquiring module 701 to each client in the subscription list acquired by the list acquiring module 702, the reminder event indicating each client to issue an event reminder according to the reminder event.

In summary, in the device for event reminding provided by the present embodiment, by acquiring a reminder event in an alarm channel, the alarm channel providing an event reminder service to at least two clients at the same time; acquiring a subscription list of the alarm channel, the subscription list including respective clients who subscribe to the alarm channel; and then sending the reminder event to each client in the subscription list, the reminder event indicating each client to issue an event reminder according to the reminder event without setting the alarm by the user in his terminal, the problems in the related art that the user needs to set the alarm for individual events, and if the user forgets to set the alarm he would miss the important events, and that the event notification may be issued too late for the user to set the event reminder are solved. The result is that the user need not manually set the alarm and can receive the alarm reminder timely, thus avoiding forgotten events or delays.

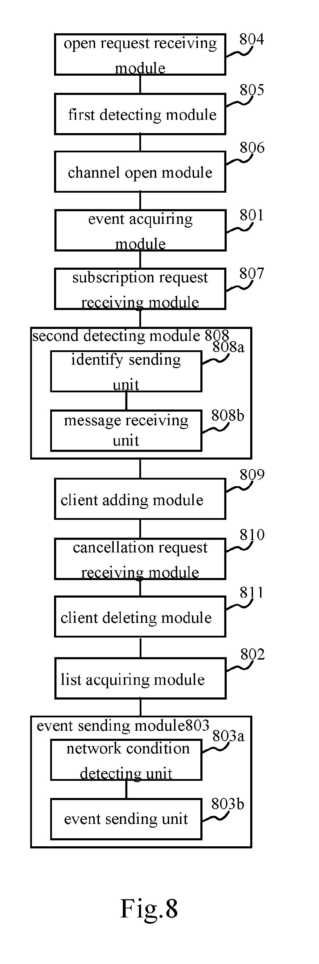

Fig. 8 is a block diagram of a device for event reminding illustrated according to an exemplary embodiment. As shown in Fig. 8, the device for event reminding is applied to the alarm server 120 in the implementing environment of Fig. 1, and the device for event reminding may include, an event acquiring module 801, a list acquiring module 802 and an event sending module 803.

The event acquiring module 801 is configured to acquire a reminder event in an alarm channel.

The list acquiring module 802 is configured to acquire a subscription list of the alarm channel.

The event sending module 803 is configured to send the reminder event acquired by the event acquiring module 801 to each client in the subscription list acquired by the list acquiring module 802.

In a first possible implementation of this embodiment,
the event sending module 803 is configured to send the reminder event including the reminder time and the reminder reason to each client.

In a second possible implementation of this embodiment, the event sending module 803 includes:
a network condition detecting unit 803a configured to detect whether condition of network via which communicating with the client is better than a pre-set condition for each client in respective clients; and
an event sending unit 803b configured to, if the detection result of the network condition detecting unit 803a is that the condition of network via which communicating with the client is better than the pre-set condition, send the reminder event including the reminder time, reminder reason and reminder manner to the client, the reminder manner including at least one of a reminder number, a reminder ringtone and a reminder page.

In a third possible implementation of this embodiment, the reminder ringtone includes a ringtone corresponding to the reminder event, and/or
the reminder page includes an operating entrance for guiding the clients to respond to the reminder event.

In a fourth possible implementation of this embodiment, the device further includes:
an open request receiving module 804 configured to receive an open request for opening the alarm channel sent from the authentication server;
a first detecting module 805 configured to detect whether the authentication server has an authority to open the alarm channel; and
a channel open module 806 configured to, if the detection result of the first detecting module 805 is that the authentication server has the authority to open the alarm channel, open the alarm channel, and return an open successful message to the authentication server.

In a fifth possible implementation of this embodiment, the device further includes:
a subscription request receiving module 807 configured to receive the subscription request for subscribing to the alarm channel sent from the first client;
a second detecting module 808 configured to detect whether the first client has the authority to subscribe to the alarm channel; and
a client adding module 809 configured to, when the detection result of the second detecting module 808 is that the first client has the authority to subscribe to the alarm channel, add the first client to the subscription list, and return a subscription successful message to the first client.

In a sixth possible implementation of this embodiment, the second detecting module 808 includes:
an identify sending unit 808a configured to send an identify of the first client to the authentication server to which the alarm channel corresponds; and
a message receiving unit 808b configured to receive the authentication passing message returned from the authentication server, the authentication passing message being a message returned after authenticating the first client according to the identify by the authentication server, and indicating that the first client has the subscription authority for subscribing to the alarm channel.

In a seventh possible implementation of this embodiment, the device further includes:
a cancellation request receiving module 810 configured to receive a cancellation request for unsubscribing to the alarm channel sent from the second client; and
a client deleting module 811 configured to delete the second client from the subscription list, and return the cancellation successful message to the second client.

In summary, in the device for event reminding provided by the embodiment of the present disclosure, by acquiring a reminder event in an alarm channel, the alarm channel providing an event reminder service to at least two clients at the same time; acquiring a subscription list of the alarm channel, the subscription list including respective clients who subscribe to the alarm channel; and then sending the reminder event to each client in the subscription list, the reminder event indicating each client to issue an event reminder according to the reminder event without setting the alarm by the user in his terminal, the problems in the related art that the user needs to set the alarm for individual events, and if the user forgets to set the alarm he would miss the important events, and that the event notification may be issued too late for the user to set the event reminder are solved. The result is that the user need not manually set the alarm and can receive the alarm reminder timely, thus avoiding forgotten events or delays.

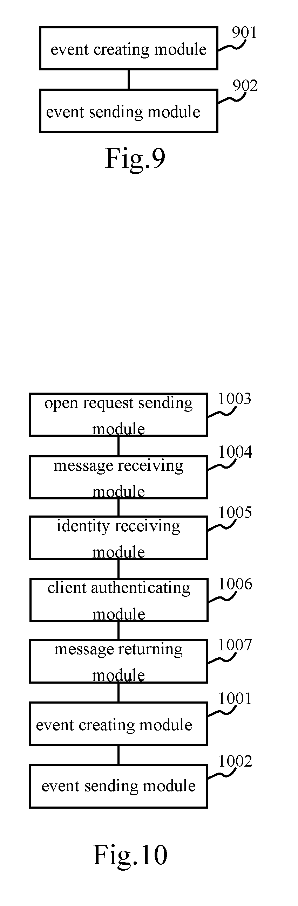

Fig. 9 is a block diagram of a device for event reminding illustrated according to another exemplary embodiment. As shown in Fig. 9, the device for event reminding is applied to the authentication server 110 in the implementing environment of Fig. 1. The device for event reminding may include, an event creating module 901 and an event sending module 902.

The event creating module 901 is configured to create a reminder event in an alarm channel, the alarm channel providing an event reminder service to at least two clients at the same time.

The event sending module 902 is configured to send the reminder event created by the event creating module 901 to an alarm server, the reminder event indicating the alarm server to forward the reminder event to each client in a subscription list of the alarm channel, the subscription list including respective clients who subscribe to the alarm channel, and the reminder event indicating each client to issue an event reminder according to the reminder event.

In summary, in the device for event reminding provided by the present embodiment, by creating a reminder event in an alarm channel, the alarm channel providing an event reminder service to at least two clients at the same time; and sending the reminder event to an alarm server, the reminder event indicating the alarm server to forward the reminder event to each client in the subscription list of the alarm channel, the subscription list including respective clients who subscribe to the alarm channel, and the reminder event indicating each client to issue an event reminder according to the reminder event, the problems in the related art that the user needs to set the alarm for individual events, and if the user forgets to set the alarm he would miss the important events, and that the event notification may be issued too late for the user to set the event reminder are solved. The result is that the user need not manually set the alarm and can receive the alarm reminder timely, thus avoiding forgotten events or delays.

Fig. 10 is a block diagram of a device for event reminding illustrated according to another exemplary embodiment. As shown in Fig. 10, the device for event reminding is applied to the authentication server 110 in the implementing environment of Fig. 1. The device for event reminding may include an event creating module 1001 and an event sending module 1002.

The event creating module 1001 is configured to create a reminder event in an alarm channel.

The event sending module 1002 is configured to send the reminder event created by the event creating module 1001 to an alarm server, the reminder event indicating the alarm server to forward the reminder event to each client in a subscription list of the alarm channel.

In a first possible implementation of this embodiment,
the event creating module 1001 is configured to create the reminder event including a reminder time, a reminder reason and a reminder manner in the alarm channel, the reminder manner including at least one of a reminder number, a reminder ringtone and a reminder page.

In a second possible implementation of this embodiment, the reminder ringtone includes a ringtone corresponding to the reminder event, and/or
the reminder page includes an operating entrance for guiding the client to respond to the reminder event.

In a second possible implementation of this embodiment, the device further includes:
an open request sending module 1003 configured to send an open request for opening the alarm channel to the alarm server; and
a message receiving module 1004 configured to receive an open successful message returned from the alarm server, the open successful message being a message returned after the alarm server receiving the open request, detecting that the authentication server has the authority to open the alarm channel and then opening the alarm channel.

In a fourth possible implementation of this embodiment, the device further includes:
an identity receiving module 1005 configured to receive an identity of a first client sent from the alarm server, the first client being a client who requests to subscribe to the alarm channel;
a client authenticating module 1006 configured to authenticate the first client according to the identity received by the identity receiving module 1005;
a message returning module 1007 configured to, when the client authenticating module 1006 passes the authentication to the first client, return an authentication passing message to the alarm server, the authentication passing message indicating the first client has the subscription authority for subscribing to the alarm channel.

In summary, in the device for event reminding provided by the present embodiment, by creating a reminder event in an alarm channel, the alarm channel providing an event reminder service to at least two clients at the same time; and sending the reminder event to an alarm server, the reminder event indicating the alarm server to forward the reminder event to each client in the subscription list of the alarm channel, the subscription list including respective clients who subscribe to the alarm channel, and the reminder event indicating each client to issue an event reminder according to the reminder event, the problems in the related art that the user needs to set the alarm for individual events, and if the user forgets to set the alarm he would miss the important events, and that the event notification may be issued too late for the user to set the event reminder are solved. The result is that the user need not manually set the alarm and can receive the alarm reminder timely, thus avoiding forgotten events or delays.

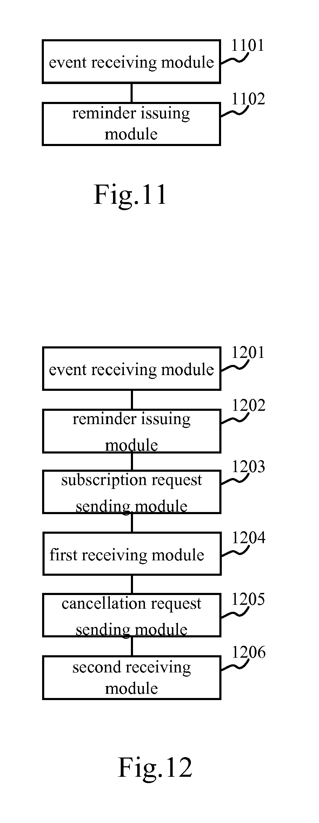

Fig. 11 is a block diagram of a device for event reminding illustrated according to another exemplary embodiment. As shown in Fig. 11 the device for event reminding is applied to the client 130 in the implementing environment of Fig. 1. The device for event reminding may include an event receiving module 1101 and a reminder issuing module 1102.

The event receiving module 1101 is configured to receive a reminder event sent from an alarm server, the reminder event is a reminder event in an alarm channel which is acquired by the alarm server and is an event sent to each client in a subscription list of the alarm channel after acquiring the subscription list, the alarm channel provides an event reminder service to at least two clients at the same time, and the subscription list includes respective clients who subscribe to the alarm channel.

The reminder issuing module 1102 is configured to issue an event reminder according to the reminder event.

In summary, in the device for event reminding provided by the present embodiment, by receiving a reminder event sent from an alarm server, the reminder event being a reminder event in an alarm channel which is acquired by the alarm server and being an event sent to each client in a subscription list of the alarm channel after acquiring the subscription list, the alarm channel providing an event reminder service to at least two clients at the same time, and the subscription list including respective clients who subscribe to the alarm channel; and then issuing an event reminder according to the reminder event, the problems in the related art that the user needs to set the alarm for individual events, and if the user forgets to set the alarm he would miss the important events, and that the event notification may be issued too late for the user to set the event reminder are solved. The result is that the user need not manually set the alarm and can receive the alarm reminder timely, thus avoiding forgotten events or delays.

Fig. 12 is a block diagram of a device for event reminding illustrated according to another exemplary embodiment. As shown in Fig. 12 the device for event reminding is applied to the client 130 in the implementing environment of Fig. 1. The device for event reminding may include an event receiving module 1201 and a reminder issuing module 1202.

The event receiving module 1201 is configured to receive a reminder event sent from an alarm server, the reminder event is a reminder event in an alarm channel which is acquired by the alarm server and is an event sent to each client in a subscription list of the alarm channel after acquiring the subscription list, the alarm channel provides an event reminder service to at least two clients at the same time, and the subscription list includes respective clients who subscribe to the alarm channel.

The reminder issuing module 1202 is configured to issue an event reminder according to the reminder event.

In a first possible implementing manner of the present embodiment, the device further includes:
a subscription request sending module 1203 configured to send a subscription request for subscribing to the alarm channel to the alarm server; and
a first receiving module 1204 configured to receive a subscription successful message returned from the alarm server.

In a second possible implementing manner of the present embodiment, the device further includes:
a cancellation request sending module 1205 configured to send a cancellation request for unsubscribing to the alarm channel to the alarm server; and
a second receiving module 1206 configured to receive a cancellation successful message returned from the alarm server.

In summary, in the device for event reminding provided by the present embodiment, by receiving a reminder event sent from an alarm server, the reminder event being a reminder event in an alarm channel which is acquired by the alarm server and being an event sent to each client in a subscription list of the alarm channel after acquiring the subscription list, the alarm channel providing an event reminder service to at least two clients at the same time, and the subscription list including respective clients who subscribe to the alarm channel; and then issuing an event reminder according to the reminder event, the problems in the related art that the user needs to set the alarm for individual events, and if the user forgets to set the alarm he would miss the important events, and that the event notification may be issued too late for the user to set the event reminder are solved. The result is that the user need not manually set the alarm and can receive the alarm reminder timely, thus avoiding forgotten events or delays.

The present embodiment provides a system for event reminding which may include an alarm server, an authentication server and a client. The details of the alarm server may refer to the embodiments corresponding to Fig. 7 or Fig. 8, the details of the authentication server may refer to the embodiments corresponding to Fig. 9 or Fig. 10, and the details of the client may refer to the embodiments corresponding to Fig. 11 or Fig. 12, which are not described repeatedly herein.

In summary, in the system for event reminding provided by the present embodiment, by acquiring a reminder event in an alarm channel; acquiring a subscription list of the alarm channel; and then sending the reminder event to each client in the subscription list without setting the alarm by the user in his terminal, the problems in the related art that the user may not able to receive the event reminder in time thus delay or forget to deal with related events are solved. The result is that the user need not manually set the alarm and may receive the alarm reminder timely, thus avoiding forgotten events or delays.

It should be noted that, when the device for event reminding provided by the above embodiments performs an event reminder, only the above-mentioned divided functional modules are illustrated. In actual application, the above functions may be assigned to be achieved by different functional modules according to requirements, i.e., the internal structure of the terminal is divided into different functional modules to achieve all or part of functions mentioned above. In addition, the devices for event reminding provided by the above embodiments belong to the same concept with the embodiment of the methods for event reminding s, and the specific implementing process thereof may refer to the method embodiments, which are not described repeatedly herein.

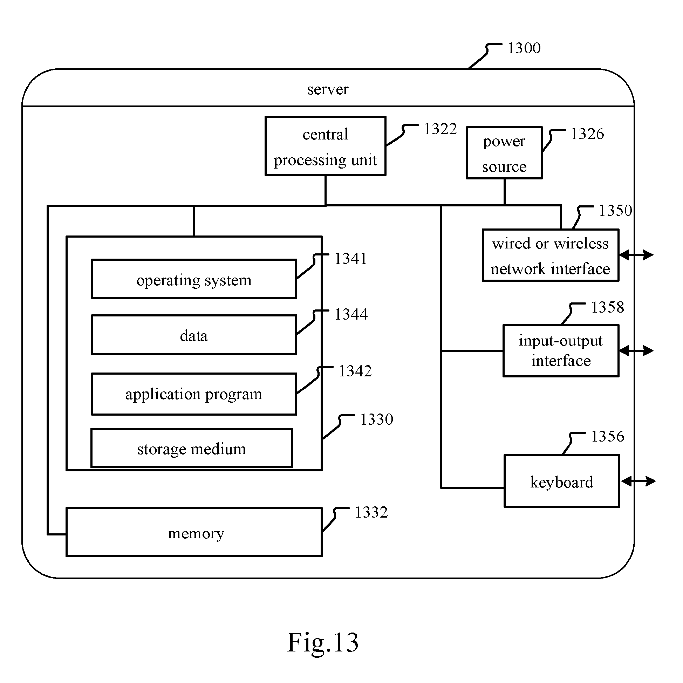

Fig. 13 is a block diagram of a server illustrated in the embodiments of the present disclosure. The server 1300 may be an authentication server 110 or an alarm server 120, and the server 1300 may have relatively large difference due to distinct configuration or performance. The server 1300 may include one or more central processing units (CPU) 1322, such as one or more processors, a memory 1332, and one or more storage medium 1330, such as one or more mass storage devices, for storing application programs 1342 or data 1344. The memory 1332 and the storage medium 1330 may perform a transient or persistent storage. The program stored in the storage medium 1330 may include one or more modules (not shown in the drawings), and each module may include a series of operating instructions for the server. Further, the CPU 1322 may be configured to communicate with the storage medium 1330, and execute a series of operating instructions in the storage medium 1330 on the server 1300.

The server 1300 may also include one or more power sources 1326, one or more wired or wireless network interfaces 1350, one or more input-output interfaces 1358, one or more keyboards 1356, and/or one or more operating systems 1341, such as Windows ServerTM, Mac OS XTM, UnixTM, LinuxTM, FreeBSDTM.

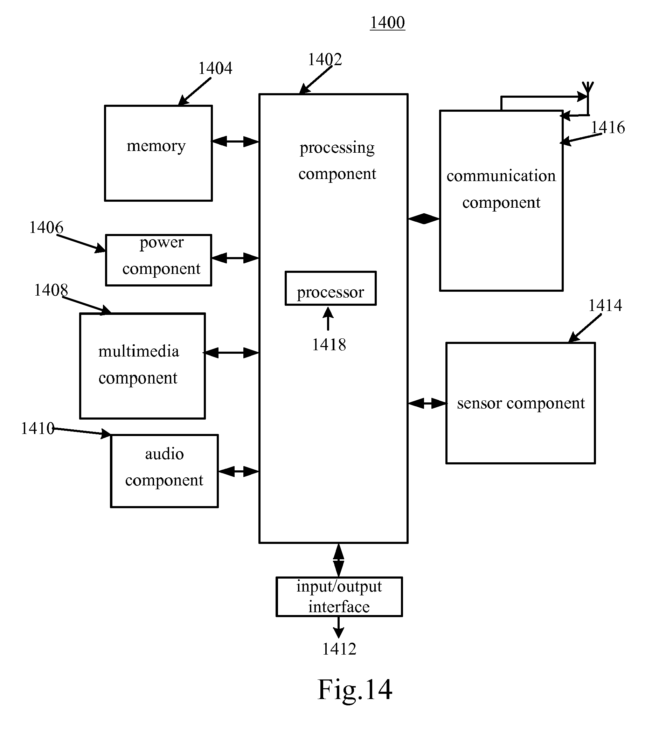

Fig. 14 is a block diagram of an apparatus 1400 for event reminder illustrated according to an exemplary embodiment. For example, the apparatus 1400 may be a mobile phone, a computer, a digital broadcast terminal, a messaging device, a game console, a tablet device, a personal digital assistants.

Referring to Fig. 14, the device 1400 may include one or more of the following components: a processing component 1402, a memory 1404, a power component 1406, a multimedia component 1408, an audio component 1410, an input/output (I/O) interface 1412, a sensor component 1414, and a communication component 1416.

The processing component 1402 typically controls overall operations of the device 1400, such as the operations associated with display, telephone calls, data communications, camera operations, and recording operations. The processing component 1402 may include one or more processors 1420 to execute instructions to perform all or part of the steps in the above described methods. Moreover, the processing component 1402 may include one or more modules which facilitate the interaction between the processing component 1402 and other components. For instance, the processing component 1402 may include a multimedia module to facilitate the interaction between the multimedia component 1408 and the processing component 1402.

The memory 1404 is configured to store various types of data to support the operation of the device 1400. Examples of such data include instructions for any applications or methods operated on the device 1400, contact data, phonebook data, messages, pictures, video, etc. The memory 1404 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or an optical disk.

The power component 1406 provides power to various components of the device 1400. The power component 1406 may include a power management system, one or more power sources, and any other components associated with the generation, management, and distribution of power in the device 1400.

The multimedia component 1408 includes a screen providing an output interface between the device 1400 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1408 includes a front camera and/or a rear camera. The front camera and/or the rear camera may receive an external multimedia datum while the device 1400 is in an operation mode, such as a photographing mode or a video mode. Each of the front camera and the rear camera may be a fixed optical lens system or have focus and optical zoom capability.

The audio component 1410 is configured to output and/or input audio signals. For example, the audio component 1410 includes a microphone ("MIC") configured to receive an external audio signal when the device 1400 is in an operation mode, such as a call mode, a recording mode, and a voice recognition mode. The received audio signal may be further stored in the memory 1404 or transmitted via the communication component 1416. In some embodiments, the audio component 1410 further includes a speaker to output audio signals.

The I/O interface 1412 provides an interface between the processing component 1402 and peripheral interface modules, such as a keyboard, a click wheel, buttons, and the like. The buttons may include a home button, a volume button, a starting button, and a locking button.

The sensor component 1414 includes one or more sensors to provide status assessments of various aspects of the device 1400. For instance, the sensor component 1414 may detect an open/closed status of the device 1400, relative positioning of components, e.g., the display and the keypad, of the device 1400, a change in position of the device 1400 or a component of the device 1400, a presence or absence of user contact with the device 1400, an orientation or an acceleration/deceleration of the device 1400, and a change in temperature of the device 1400. The sensor component 1414 may include a proximity sensor configured to detect the presence of nearby objects without any physical contact. The sensor component 1414 may also include a light sensor, such as a CMOS or CCD image sensor, for use in imaging applications. In some embodiments, the sensor component 1414 may also include an accelerometer sensor, a gyroscope sensor, a magnetic sensor, a pressure sensor, or a temperature sensor.

The communication component 1416 is configured to facilitate communication, wired or wirelessly, between the device 1400 and other devices. The device 1400 can access a wireless network based on a communication standard, such as WiFi, 2G, or 3G, or a combination thereof. In one exemplary embodiment, the communication component 1416 receives a broadcast signal or broadcast associated information from an external broadcast management system via a broadcast channel. In one exemplary embodiment, the communication component 1416 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1400 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1404, executable by the processor 1418 in the device 1400, for performing the above-described methods. For example, the non-transitory computer-readable storage medium may be a ROM, a RAM, a CD-ROM, a magnetic tape, a floppy disk, an optical data storage device, and the like.

## Claims

1. A method for event reminding, **characterized in that** the method comprises, at an alarm server (120):
acquiring (201, S503, S608) a reminder event in an alarm channel, the alarm channel implemented by the alarm server (120) providing an event reminder service to at least two clients (130) at the same time;
acquiring (202, S504, S609), by the alarm server (120), a subscription list of the alarm channel, the subscription list comprising respective clients (130) who subscribe to the alarm channel; and
sending (203, S505, S610), by the alarm server (120), the reminder event to each client (130) in the subscription list, the reminder event indicating each client (130) to issue an event reminder according to the reminder event.

2. The method of claim 1, wherein the sending (203, S505, S610) the reminder event to each client (130) in the subscription list comprises:
sending (S610) the reminder event comprising a reminder time and a reminder reason to each client (130).

3. The method of claim 1, wherein the method further comprises:
receiving (S614) a subscription request for subscribing to the alarm channel sent from a first client (130) to the alarm server;
detecting (S615) whether the first client (130) has an authority to subscribe to the alarm channel; and
if the first client (130) has the authority to subscribe to the alarm channel, adding (S616) the first client (130) to the subscription list, and returning a subscription successful message to the first client (130).

4. A method for event reminding, **characterized in that** the method comprises, at an authentication server (110):
creating (S501, 301, S606) a reminder event in an alarm channel, the alarm channel providing an event reminder service to at least two clients(130) at the same time; and
sending (S502, 302, S607) the reminder event to an alarm server (120), the reminder event indicating the alarm server (120) to forward the reminder event to each client (130) in a subscription list of the alarm channel, the subscription list comprising respective clients (130) who subscribe to the alarm channel, and the reminder event indicating each client (130) to issue an event reminder according to the reminder event.

5. The method of claim 4, wherein the creating (S501, 301, S606) the reminder event in the alarm channel comprises:
creating the reminder event comprising a reminder time, a reminder reason and a reminder manner in the alarm channel, the reminder manner comprising at least one of a reminder number, a reminder ringtone and a reminder page.

6. The method of claim 4, wherein the method further comprises:
sending (S601) an open request for opening the alarm channel to the alarm server (120); and
receiving (S605) an open successful message returned from the alarm server (120), the open successful message being a message returned after the alarm server (120) receiving the open request, detecting that the authentication server (120) has the authority to open the alarm channel and then opening the alarm channel.

7. The method of claim 4, wherein the method further comprises:
receiving an identity of a first client (130) sent from the alarm server (120), the first client being a client who requests to subscribe to the alarm channel;
authenticating the first client according to the identity; and
when the authentication to the first client is passed, returning an authentication passing message to the alarm server, the authentication passing message indicating the first client has the subscription authority for subscribing to the alarm channel.

8. A method for event reminding, **characterized in that** the method comprises, at a client (130):
receiving (S506, S611) a reminder event sent from an alarm server (120), the reminder event being a reminder event in the alarm channel which is acquired by the alarm server (120) and is an event sent to each client in the subscription list; and
issuing (S507, S612) an event reminder at the client (130) according to the reminder event.

9. The method of claim 8, wherein the method further comprises:
sending (S613) a subscription request for subscribing to the alarm channel to the alarm server (120); and
receiving (S616) a subscription successful message returned from the alarm server (120).

10. The method of claim 8, wherein the method further comprises:
sending (S618) a cancellation request for unsubscribing to the alarm channel to the alarm server (120); and
receiving (S621) a cancellation successful message returned from the alarm server (120).

11. An alarm server device (120) for event reminding, **characterized in that** the device comprises:
an event acquiring module (701, 801) configured to acquire (201, S503, S608) a reminder event in an alarm channel, the alarm channel providing an event reminder service to at least two clients (130) at the same time;
a list acquiring module (702, 802) configured to acquire (202, S504, S609) a subscription list of the alarm channel, the subscription list comprising respective clients who subscribe to the alarm channel; and
an event sending module (703, 803) configured to send (203, S505, S610) the reminder event acquired by the event acquiring module (701, 801) to each client (130) in the subscription list, the reminder event indicating each client (130) to issue an event reminder according to the reminder event.

12. An authentication server device (110) for event reminding, **characterized in that** the device comprises:
an event creating module(901, 1001) configured to create (S501, 301, S606) a reminder event in an alarm channel, the alarm channel providing an event reminder service to at least two clients(130) at the same time; and
an event sending module(902, 1002) configured to send (S502, 302, S607) the reminder event created by the event creating module(901, 1001) to an alarm server(120), the reminder event indicating the alarm server(120) to forward the reminder event to each client in a subscription list of the alarm channel, the subscription list comprising respective clients(130) who subscribe to the alarm channel, and the reminder event indicating each client to issue an event reminder according to the reminder event.

13. A client device (130) for event reminding, **characterized in that** the device comprises:
an event receiving module (1101, 1201) configured to receive (S506, S611) a reminder event sent from an alarm server (120), the reminder event being a reminder event in an alarm channel which is acquired by the alarm server (120) and is an event sent to each client (130) in a subscription list of the alarm channel after acquiring the subscription list, the alarm channel providing an event reminder service to at least two clients (130) at the same time, and the subscription list comprising respective clients (130) who subscribe to the alarm channel; and
a reminder issuing module (1102, 1202) configured to issue (S507, S612) an event reminder according to the reminder event.

14. A system for event reminding, **characterized in that** the system comprises
the alarm server (120) device according to claim 11;
an authentication server (110) device according to claim 12 connected with the alarm server (120) wired or wirelessly, and adapted to a client (130) device; and
at least one client (130) device according to claim 13 connected with the alarm server (120) wired or wirelessly.

15. A computer program, which when executing on a processor (1418), performs a method according to any one of, claims 1 to 3, or claims 4 to 7, or claims 8 to 10.
